# FASCICULE DE BREVET EUROPEEN

(11) **EP 3 369 637 B1**
(45) Date de publication et mention de la délivrance du brevet: **20.01.2021**
(21) Numéro de dépôt: 18159106.6
(22) Date de dépôt: 28.02.2018
(51) Int. Cl.: B61C 3/00, B61C 17/04, B61C 17/06, B61D 27/00

(54) **MOTRICE DE TRAIN À GRANDE VITESSE**
TRIEBWAGEN FÜR HOCHGESCHWINDIGKEITSZUG
POWER UNIT OF HIGH-SPEED TRAIN

(30) Priorité: 01.03.2017 FR 1751673
(43) Date de publication de la demande: 05.09.2018
(73) Titulaire: ALSTOM Transport Technologies, 93400 Saint-Ouen (FR)
(72) Inventeur: DEBOST, Pierre, 92230 Genevilliers (FR); BERA, Laurent, 25200 Montbeliard (FR); LEMPEGNAT, Bruno, 64290 Gan (FR); CHANAL, Pierre, 65360 Vielle Adour (FR)
(74) Mandataire: Lavoix

(56) Documents cités:
- EP-A1- 1 024 070
- EP-A1- 2 314 492
- WO-A1-2016/139167
- DE-A1-102015 215 640

## Description

La présente invention concerne une motrice de train à grande vitesse, notamment pour le transport des voyageurs.

Les trains à grande vitesse ont récemment connu un développement remarquable, attirant un nombre croissant de voyageurs. Très souvent, sur les trains à grande vitesse, le transport de passagers est autorisé uniquement avec réservation d'un siège, pour le bon respect des normes de sécurité. Pour cette raison, le nombre de voyageurs autorisés et le rendement économique de la société qui gère le service de transport sont liés à la taille du train lui-même, c'est-à-dire au nombre des sièges disponibles.

Un train à grande vitesse comprend une ou plusieurs motrices, le plus souvent une à chaque extrémité de rame, et un certain nombre de voitures passagers.

Aujourd'hui, la longueur des rames de train est limitée par la longueur des quais passagers, avec un maximum de 400 mètres, suivant la norme STI Infrastructure. Par ailleurs, l'implantation des sièges voyageurs dans les voitures passagers est délicate à densifier sans nuire au confort des voyageurs.

Pour augmenter la capacité de transport de voyageurs dans un train à grand vitesse il reste donc principalement une possibilité, à savoir réduire la longueur des deux motrices installées aux extrémités de chaque rame.

L'architecture actuelle d'une motrice de tête d'un train à grande vitesse comprend des blocs de traction, un transformateur et des armoires électriques installés dans la partie centrale d'un compartiment machine, avec deux couloirs latéraux de 500 mm de largeur.

Les équipements de haute tension sont placés en toiture, alors que les équipements de freinage, l'équipement de climatisation de la cabine et les batteries sont installés en dessous de la caisse. Les aspirations d'air pour refroidir ces équipements sont réalisées par les faces latérales de la structure de la caisse de la motrice. En outre, il est normalement prévu quatre capots en toiture, qui permettent de réaliser la maintenance de chaque partie de la motrice.

CN203888794U décrit une locomotive électrique où un couloir est disposé au centre d'une salle des machines dans le sens de la longueur, alors que des équipements sont installés sur les deux côtés du ce couloir. Toutefois, cette locomotive est aussi longue que celles de l'art antérieur.

Avec les dispositions décrites ci-dessus, il n'est pas possible de réduire encore plus la longueur de la motrice pour augmenter l'espace disponible pour les voyageurs.

Des problèmes analogues se posent lorsqu'un train à grande vitesse est utilisé pour le transport de marchandises, par exemple pour le transport et le tri de courrier, dans la mesure où la place disponible pour les marchandises et les agents doit également être optimisée.

EP2314492 décrit une rame ferroviaire bi-mode constituée de plusieurs véhicules, et un convoi ferroviaire formé de telles rames présentant un plancher bas sur toute la longueur de la rame.

WO2016/139167 décrit un véhicule ferroviaire, un procédé de production et un procédé d'entraînement d'un véhicule ferroviaire qui comprend au moins une carrosserie de voiture de type connu.

Un but de l'invention est donc de proposer une motrice de train à grande vitesse qui ne présente pas les inconvénients de l'architecture de l'état de la technique.

A cet effet, l'invention a notamment pour objet une motrice de train à grande vitesse, notamment pour le transport de voyageurs, comprenant:
- une caisse ayant une toiture et un plancher, où la caisse comprend une cabine de conduite logée dans une extrémité antérieure de la caisse ;
- un compartiment technique comprenant une zone basse tension, une zone de traction et une zone technique, et
- au moins deux bogies montés sous le plancher de la caisse;
où la zone basse tension, la zone de traction et la zone technique du compartiment technique sont placées respectivement l'une à côté de l'autre le long d'un axe longitudinal de la motrice, et dans laquelle:
- la motrice comprend un transformateur principal placé sous la caisse entre les bogies;
- la zone de traction comprend un frein rhéostatique en toiture;
- la zone basse tension comprend un bloc de climatisation configuré pour climatiser la cabine de conduite;
- le bloc de climatisation est disposé en toiture ; et
- les bogies sont motorisés par des moteurs de traction.

Grâce à l'invention, la longueur de la motrice peut être réduite, alors qu'elle accommode l'ensemble des composants fonctionnels nécessaires à son fonctionnement.

Selon des aspects avantageux mais non obligatoires de l'invention, cette motrice peut incorporer une ou plusieurs des caractéristiques suivantes, prises selon toute combinaison techniquement admissible.

Dans un premier mode de réalisation de l'invention, la motrice comprend des câbles d'alimentation électrique configurés pour être connectés à des batteries de stockage d'énergie électrique disposées dans une voiture ferroviaire adjacente à la motrice.

Dans un autre mode de réalisation de l'invention, la motrice comprend un coffre électrique comprenant le transformateur principal et au moins un bobinage supplémentaire, le coffre électrique étant placé sous la caisse entre les bogies.

Dans un autre mode de réalisation de l'invention, la zone de traction comprend au moins un bloc de traction relié électriquement au bobinage supplémentaire, le bloc de traction et le bobinage supplémentaire formant un circuit de conversion d'énergie électrique.

Dans un autre mode de réalisation de l'invention, la zone de traction et la zone technique comprennent chacune un groupe de ventilation.

Dans un autre mode de réalisation de l'invention, le compartiment technique comprend un couloir central ayant une largeur mesurée perpendiculairement à l'axe longitudinal et selon une direction horizontale en configuration normale d'utilisation de cette motrice qui a une valeur comprise entre 500 et 750mm.

Dans un autre mode de réalisation de l'invention, la zone basse tension, la zone de traction et la zone technique comprennent chacune au moins une prise d'entrée d'air et une prise de sortie d'air respectives installées en hauteur, en toiture.

Dans un autre mode de réalisation de l'invention, la zone technique se trouve à une extrémité postérieure de la motrice opposée à l'extrémité antérieure où se trouvent la cabine de conduite et la zone basse tension, la zone de traction et la zone technique étant placées respectivement l'une à côté de l'autre le long de l'axe longitudinal de la motrice.

Dans un autre mode de réalisation de l'invention, un pantographe est placé en toiture de la zone technique et dans laquelle la zone technique comprend, sous un capot de la toiture, un bloc haute tension comprenant un disjoncteur et/ou un sectionneur propre à isoler électriquement le pantographe d'une chaîne de traction comprise dans la motrice.

Dans un autre mode de réalisation de l'invention, la motrice comprends trois capots amovibles installés en toiture pour protéger les équipements montés en toiture au niveau respectivement des zones basse tension, de traction et technique.

L'invention et d'autres avantages de celle-ci seront mieux compris à la lecture de la description qui va suivre, donnée uniquement à titre d'exemple et faite en se référant aux dessins annexés dans lesquels :
- la figure 1 est une vue schématique de dessus d'une motrice conforme à l'invention, sans sa toiture, et
- la figure 2 est une coupe longitudinale de la motrice de figure 1, selon la ligne II-II représentée à la figure 1.

Brièvement, la motrice de train à grande vitesse de la présente invention inclut un couloir central et une pluralité de blocs de fonctionnement installés à gauche et à droite de ce couloir dans un compartiment technique, pour réaliser les actions suivantes :
- réduire la longueur des équipements de la chaîne de traction;
- réaliser un bloc de traction par bogie avec les équipements auxiliaires intégrés;
- installer les équipements qui, dans l'art antérieur, étaient en toiture dans le compartiment technique;
- installer un rhéostat de freinage en toiture;
- installer un transformateur principal en sous caisse;
- créer l'aspiration d'air dans la toiture.

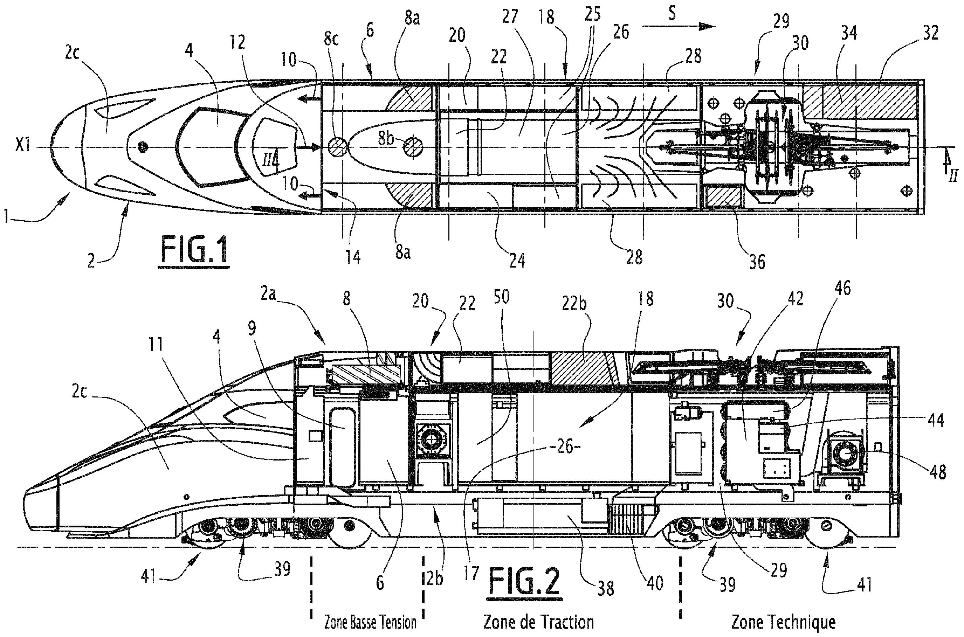

Telle que représenté sur les figures 1 et 2, où les mêmes éléments sont repérés avec les mêmes références, une motrice conforme à l'invention 1 comprend une caisse 2 ayant une toiture 2a et un plancher 2b et qui présente une extrémité antérieure 2c apte à loger une cabine de conduite 4 visible à travers son parebrise et une de ses vitres latérales.

On définit l'avant de la motrice 1 comme le côté vers lequel elle avance en fonctionnement normal. L'arrière de la motrice est opposé à l'avant de la motrice. Sur la figure 1, une flèche S va de l'avant vers l'arrière de la motrice 1.

En poursuivant la description de la motrice 1 dans le sens indiqué par la flèche S, à côté de la cabine de conduite 4 se trouve un compartiment technique 18 comprenant une zone basse tension 6 où est installé un système HVAC 8 (Heat Ventilation Air conditioning and Cooling) propre à climatiser la cabine de conduite 4; une zone de traction 17 décrite en détail ci-dessous; et une zone technique 29 décrite aussi en détail ci-dessous.

Le système HVAC 8 de la motrice 1 comprend deux prises d'air d'entrée 8a et une prise de sortie d'air 8b. Le système HVAC 8 est visible à la figure 2.

La zone basse tension est en outre équipée d'une prise de sortie d'air 8c pour l'air interne du compartiment technique 18.

Une ouverture d'entrée sur chaque face de la motrice, qui est normalement obturée par une porte 9, débouche dans le compartiment technique 18 au niveau de la zone basse tension 6.

Dans la zone basse tension 6 sont placés un système de contrôle du train et des systèmes de contrôle de sécurité et de signalisation de la motrice 1. Ces systèmes connus de l'homme du métier sont intégrés dans des armoires de contrôle 11 disposées le long d'un axe longitudinal X1 de la motrice 1, entre la cabine de conduite 4 et les portes 9.

Des flux d'air 10 vers la cabine de conduite 4 et des flux d'air d'échappement 12 d'air vers le système HVAC 8 passent à travers une cloison de séparation 14.

La zone de traction 17 comprend deux blocs de traction 50 de la motrice 1. Sur le dessus de la zone de traction 17, c'est-à-dire en toiture, sont disposés un frein rhéostatique 22, une prise d'entrée d'air 20 pour la zone de traction 17, deux prises d'entrée d'air 28 et une prise de sortie d'air 27 pour le frein rhéostatique 22, deux prises d'entrée d'air 25 pour les blocs de traction 50 et une prise d'entrée d'air 24 pour des moteurs électriques de traction 39 de la motrice 1. La figure 2 montre le frein rhéostatique 22 avec son unité d'aération 22b.

Le système HVAC 8 constitue le groupe de climatisation, les éléments 20, 25, 28, 27, 22b et 24 constituent des groupes de ventilation de la motrice 1 et de ses accessoires. La prise d'entrée d'air 20 pour le compartiment technique 18 se trouve sur un côté d'un couloir central 26 du compartiment technique 18, tandis que la prise d'entrée d'air 24 pour les moteurs électriques de traction 39 se trouve de l'autre côté du couloir central 26. Avantageusement, le couloir central 26 a une largeur I₂₆, mesurée perpendiculairement à l'axe longitudinal X1 et selon une direction horizontale en configuration normale d'utilisation de cette motrice, qui est égale à environ 700mm. En pratique, la largeur I₂₆ peut avoir une valeur comprise entre 500 et 750 mm, de préférence égale à 700mm environ. Cette largeur I₂₆ est déterminée pour permettre un passage confortable d'un opérateur, sans limiter sensiblement le volume disponible pour les équipements de la motrice.

La prise de sortie d'air 27 pour le frein rhéostatique est placée en toiture au-dessus du couloir central 26.

Les prises d'entrée d'air 28 pour le frein rhéostatique 22 sont placées en toiture des deux côtés du couloir 26.

Les prises d'entrée d'air 25 pour les blocs de traction 50 sont placées en toiture des deux côtés du couloir 26, respectivement au-dessus des blocs de traction 50.

À l'extrémité postérieure de la motrice 1 opposée à celle où se trouve la cabine de conduite 4 se trouve la zone technique 29. Ainsi, la zone basse tension 6, la zone de traction 17 et la zone technique 29 sont placées respectivement l'une à côté de l'autre, le long de l'axe longitudinal X1 de la motrice 1, dans le compartiment technique 18.

Sur la toiture de la zone technique 29 est placé un pantographe 30, une prise d'entrée d'air 32 pour les moteurs de traction 39, une prise d'entrée d'air 34 pour une production d'air délivrée par un réservoir d'air supplémentaire 46 décrit ci-dessous, et une prise d'entrée d'air 36 pour un ventilateur de la zone technique 29 et une prise de sortie d'air. Ces prises d'entrée d'air 32, 34 et 36 font également partie des groupes de ventilation de la motrice 1 et de ses accessoires, en l'espèce les moteurs de tractions 39 et le ventilateur.

La prise d'entrée d'air 36 se trouve sur un côté d'un couloir central 26 du compartiment technique 18, tandis que la prise d'entrée d'air 32 pour les moteurs électriques de traction 39 se trouve de l'autre côté du couloir central 26.

Dans la zone technique 29 se trouvent, de façon connue par l'homme de métier, un bloc haute-tension, un bloc de distribution auxiliaire et un panneau de freinage non représentés. Le bloc haute-tension comprend un disjoncteur et/ou un sectionneur propre à isoler électriquement le pantographe 30 d'une chaîne de traction comprise dans la motrice 1. Le disjoncteur et/ou sectionneur est placé sous un capot de la toiture, c'est-à-dire en toiture.

Sur la figure 2, on reconnaît un transformateur principal 38 placé sous le plancher 2b de la caisse 2, entre deux bogies 41 montés sous le plancher 2b. A l'arrière du transformateur principal 38 est disposée une sortie d'air 40 pour le bloc moteur.

Les bogies 41 sont motorisés par les moteurs de traction 39.

Au-dessous du pantographe 30, dans la caisse 2, se trouve un déshydrateur d'air 42 (*air dryer*) avec un réservoir d'air principal 44 et un réservoir d'air supplémentaire 46 associés, ainsi qu'un ventilateur 48 pour les moteurs de traction 39 associé à la prise d'air 32.

Comme il ressort de la description ci-dessus, les réservoirs d'air 44 et 46 sont installés dans la caisse 2 et les groupes de ventilation 8, 20, 25, 28, 27, 22b, 24, 32, 34 et 36 sont installés en toiture, au-dessus de la zone basse tension 6, de la zone de traction 17 et de la zone technique 29 dans le compartiment technique 18. La motrice grande vitesse 1 selon la présente invention comprend, en outre, trois capots non représentés installés en toiture pour protéger les équipements montés au-dessus respectivement de la zone basse tension 6, de la zone de traction 17 et de la zone technique 29. Ces capots sont amovibles pour permettre de réaliser la maintenance des équipements en question.

La motrice selon la présente invention comprend en outre:
- des câbles d'alimentation électrique configurés pour être connectés à des batteries de stockage d'énergie électrique disposées dans une voiture ferroviaire adjacente à la motrice elle-même.

Avantageusement, un coffre électrique comprenant le transformateur principal 38 et au moins un bobinage supplémentaire est placé sous la caisse 2 entre les bogies 41.

Avantageusement encore au moins l'un des blocs de traction 50 est relié électriquement au bobinage supplémentaire, le bloc de traction 50 et le bobinage supplémentaire formant un circuit de conversion d'énergie électrique.

La motrice de la présente invention présente les avantages suivants:
- la motrice 1 est plus courte que les motrices de l'art antérieur. Sa longueur est inférieure à 19m, c'est-à-dire inférieure de 4 m à celle d'une motrice actuelle de train à grande vitesse; cette caractéristique permet donc de gagner 8 m de longueur sur les deux motrices d'une rame de train, en augmentant la capacité des passagers dans les voitures passagers;
- l'air de refroidissement est aspiré en toiture, en limitant la pollution dans le compartiment technique 18;
- l'aspiration de l'air en toiture (au lieu d'une aspiration sur les faces latérales) permet de réduire le bruit vis-à-vis de l'extérieur et d'avoir des panneaux de faces latérales sans ouverture, qui sont plus esthétiques et permettent plus de liberté en matière de design;
- l'installation du transformateur 38 sous la caisse et des équipements haute tension dans le compartiment technique 18 permet d'abaisser le centre de gravité global de la motrice 1 et de réduire ses dimensions;
- la résistance à l'avancement est réduite parce que l'installation des équipements haute tension dans le compartiment technique permet de capoter complètement une partie de la toiture.

Le principe de l'invention restant le même, les modes de réalisation et les détails de la fabrication peuvent varier considérablement de ce qui a été décrit et illustré uniquement à titre d'exemple non limitatif, sans sortir du cadre de protection de la présente invention défini par les revendications annexées.

## Revendications

1. Motrice de train à grande vitesse (1), notamment pour le transport de voyageurs comprenant:
- une caisse (2) ayant une toiture (2a) et un plancher (2b), où la caisse (2) comprend une cabine de conduite (4) logée dans une extrémité antérieure (2c) de la caisse (2), la caisse comprenant également un compartiment technique (18) comprenant une zone basse tension (6), une zone de traction (17) et une zone technique (29), **caractérisé en ce que**
- au moins deux bogies (41) sont montés sous le plancher (2b) de la caisse (2) ; où la zone basse tension (6), la zone de traction (17) et la zone technique (29) du compartiment technique (18) sont placées respectivement l'une à côté de l'autre le long d'un axe longitudinal (X1) de la motrice (1)
- la motrice (1) comprend un transformateur principal (38) placé sous la caisse (2) entre les bogies (41) ;
- la zone de traction (17) comprend un frein rhéostatique (22) en toiture;
- la zone basse tension (6) comprend un bloc de climatisation (8) configuré pour climatiser la cabine de conduite (4);
- le bloc de climatisation (8) est disposé en toiture, et
- les bogies (41) sont motorisés par des moteurs de traction (39).

2. Motrice selon la revendication 1, dans laquelle la motrice comprend des câbles d'alimentation électrique configurés pour être connectés à des batteries de stockage d'énergie électrique disposées dans une voiture ferroviaire adjacente à la motrice.

3. Motrice selon la revendication 1 ou 2, dans laquelle la motrice comprend un coffre électrique comprenant le transformateur principal (38) et au moins un bobinage supplémentaire, le coffre électrique étant placé sous la caisse (2) entre les bogies (41).

4. Motrice selon la revendication 3, dans laquelle la zone de traction (17) comprend au moins un bloc de traction relié électriquement au bobinage supplémentaire, le bloc de traction (17) et le bobinage supplémentaire formant un circuit de conversion d'énergie électrique.

5. Motrice selon l'une quelconque des revendications précédentes, dans laquelle la zone de traction (17) et la zone technique (29) comprennent chacune un groupe de ventilation (20, 22b, 24, 25, 27, 28, 32, 34, 36).

6. Motrice selon l'une quelconque des revendications précédentes, dans laquelle le compartiment technique (18) comprend un couloir central (26) ayant une largeur (I₂₆) mesurée perpendiculairement à l'axe longitudinal (X1) et selon une direction horizontale en configuration normale d'utilisation de cette motrice (1) qui a une valeur comprise entre 500 et 750mm.

7. Motrice selon l'une quelconque des revendications précédentes, dans laquelle la zone basse tension (6), la zone de traction (17) et la zone technique (29) comprennent chacune au moins une prise d'entrée d'air (8a, 20, 32, 34, 36) et une prise de sortie d'air (8b, 8c, 27,) installées en hauteur, en toiture.

8. Motrice selon l'une quelconque des revendications précédentes, dans laquelle la zone technique (17) se trouve à une extrémité postérieure de la motrice (1) opposée à l'extrémité antérieure où se trouve la cabine de conduite (4) et la zone basse tension (6), la zone de traction (17) et la zone technique (29) étant placées respectivement l'une à côté de l'autre le long de l'axe longitudinal (X1) de la motrice (1).

9. Motrice selon l'une quelconque des revendications précédentes, dans laquelle un pantographe (30) est placé en toiture de la zone technique (29) et dans laquelle la zone technique (29) comprend, sous un capot de la toiture, un bloc haute tension comprenant un disjoncteur et/ou un sectionneur propre à isoler électriquement le pantographe d'une chaîne de traction comprise dans la motrice.

10. Motrice selon l'une quelconque des revendications précédentes, comprenant trois capots amovibles installés en toiture pour protéger les équipements montés en toiture au niveau respectivement des zones basse tension(6), de traction (17) et technique (29).

## Patentansprüche

1. Hochgeschwindigkeitszug-Triebwagen (1), insbesondere für den Transport von Reisenden, welcher aufweist:
- eine Karosserie (2), welche ein Dach (2a) und einen Boden (2b) hat, wobei die Karosserie (2) eine Fahrkabine (4) aufweist, welche in einem vorderen Ende (2c) der Karosserie (2) untergebracht ist, wobei die Karosserie gleichermaßen ein Technikabteil (18) aufweist, welches eine Niederspannungszone (6), eine Traktionszone (17) und eine Technikzone (29) aufweist, **dadurch gekennzeichnet, dass**
- mindestens zwei Drehgestelle (41) unter dem Boden (2b) der Karosserie (2) montiert sind, wobei die Niederspannungszone (6), die Traktionszone (17) und die Technikzone (29) des Technikabteils (18) jeweils nebeneinander entlang einer Längsachse (X1) des Triebwagens (1) angeordnet sind,
- der Triebwagen (1) einen Haupttransformator (38) aufweist, welcher unter der Karosserie (2) zwischen den Drehgestellen (41) angeordnet ist,
- die Traktionszone (17) eine rheostatische Bremse (22) im Dach aufweist,
- die Niederspannungszone (6) einen Klimatisierungsblock (8) aufweist, welcher eingerichtet ist, um die Fahrkabine (4) zu klimatisieren,
- der Klimatisierungsblock (8) im Dach angeordnet ist, und
- die Drehgestelle (41) mittels Traktionsmotoren (39) motorisiert sind.

2. Triebwagen gemäß Anspruch 1, wobei der Triebwagen Kabel zur elektrischen Versorgung aufweist, welche eingerichtet sind, um mit Batterien zum Speichern von elektrischer Energie verbunden zu sein, welche in einem Eisenbahnwagen angeordnet sind, welcher angrenzend an den Triebwagen ist.

3. Triebwagen gemäß Anspruch 1 oder 2, wobei der Triebwagen einen Elektrikkasten aufweist, welcher den Haupttransformator (38) und zumindest eine Zusatzspule aufweist, wobei der Elektrikkasten unter der Karosserie (2) zwischen den Drehgestellen (41) angeordnet ist.

4. Triebwagen gemäß Anspruch 3, wobei die Traktionszone (17) zumindest einen Traktionsblock aufweist, welcher mit der Zusatzspule elektrisch verbunden ist, wobei der Traktionsblock (17) und die Zusatzspule einen Schaltkreis zum Umwandeln von elektrischer Energie bilden.

5. Triebwagen gemäß irgendeinem der vorherigen Ansprüche, wobei die Traktionszone (17) und die Technikzone (29) jeweils eine Ventilationsgruppe (20, 22b, 24, 25, 27, 28, 32, 34, 36) aufweisen.

6. Triebwagen gemäß irgendeinem der vorherigen Ansprüche, wobei das Technikabteil (18) einen zentralen Gang (26) aufweist, welcher eine Breite (I₂₆) hat, welche senkrecht zur Längsachse (X1) und entlang einer horizontalen Richtung in normaler Konfiguration der Verwendung dieses Triebwagens (1) gemessen wird und welche einen Wert hat, welcher zwischen 500 und 750mm liegt.

7. Triebwagen gemäß irgendeinem der vorherigen Ansprüche, wobei die Niederspannungszone (6), die Traktionszone (17) und die Technikzone (29) jeweilig zumindest einen Lufteinlass (8a, 20, 32, 34, 36) und einen Luftauslass (8b, 8c, 27) aufweisen, welche in der Höhe im Dach installiert sind.

8. Triebwagen gemäß irgendeinem der vorherigen Ansprüche, wobei sich die Technikzone (17) an einem hinteren Ende des Triebwagens (1) befindet, welches entgegengesetzt zum vorderen Ende ist, an welchem sich die Fahrkabine (4) und die Niederspannungszone (6) befinden, wobei die Traktionszone (17) und die Technikzone (29) jeweils nebeneinander entlang der Längsachse (X1) des Triebwagens (1) angeordnet sind.

9. Triebwagen gemäß irgendeinem der vorherigen Ansprüche, wobei ein Stromabnehmer (30) auf dem Dach der Technikzone (29) angeordnet ist und wobei die Technikzone (29), unter einer Abdeckung des Dachs, einen Hochspannungsblock aufweist, welcher einen Ausschalter und/oder einen Trennschalter aufweist, welche imstande sind, den Stromabnehmer von einer Traktionskette, welche im Triebwagen enthalten ist, elektrisch zu isolieren.

10. Triebwagen gemäß irgendeinem der vorherigen Ansprüche, welcher drei abnehmbare Abdeckungen aufweist, welche im Dach installiert sind, um die Geräte zu schützen, welche im Dach jeweilig in Bezug auf die Niederspannungszone (6), die Traktionszone (17) und die Technikzone (29) montiert sind.

## Claims

1. High speed train power unit (1), in particular for the carriage of passengers, comprising:
- a carbody (2) having a roof (2a) and a floor (2b), wherein the carbody (2) comprises a driver's cab (4) housed at a front end (2c) of the carbody (2), wherein the carbody also comprises a technical compartment (18) comprising a low voltage zone (6), a traction zone (17) and a technical zone (29), and
- at least two bogies (41) mounted under the floor (2b) of the carbody (2); where the low voltage zone (6), the traction zone (17) and the technical zone (29) of the technical compartment (18) are respectively located next to each other along a longitudinal axis (X1) of the power unit (1)
**characterized in that**
- the power unit (1) comprises a main transformer (38) located under the carbody (2) between the bogies (41);
- the traction zone (17) comprises a rheostatic brake (22) on the roof;
- the low voltage zone (6) comprises an air conditioning unit (8) designed to condition the driver's cab (4);
- the air conditioning unit (8) is arranged on the roof.

2. Power unit according to claim 1, wherein the power unit comprises power supply cables designed to be connected to electric energy storage batteries arranged in a rail car adjacent to the power unit.

3. Power unit according to claim 1 or 2, wherein the power unit comprises an electric cabinet comprising the main transformer (38) and at least one additional winding, wherein the cabinet is placed under the carbody (2) between the bogies (41).

4. Power unit according to claim 3, wherein the traction zone (17) comprises at least one traction unit electrically connected to the additional winding, wherein the traction unit (17) and the additional winding form an electrical energy conversion circuit.

5. Power unit according to any one of the preceding claims, wherein the traction zone (17) and the technical zone (29) each comprise a ventilation group (20, 22b, 24, 25, 27, 28, 32, 34, 36).

6. Power unit according to any one of the preceding claims, wherein the technical compartment (18) comprises a central corridor (26) having a width (I₂₆) measured perpendicularly to the longitudinal axis (X1) and in a horizontal direction in a configuration of normal use of this power unit (1), which has a value between 500 and 750mm.

7. Power unit according to any one of the preceding claims, wherein the low voltage zone (6), the traction zone (17) and the technical zone (29) each comprise at least one air inlet (8a, 20, 32, 34, 36) and an air outlet (8b, 8c, 27) installed up high in the roof.

8. Power unit according to any one of the preceding claims, wherein the technical zone (17) is at a rear end of the power unit (1) opposite to the front end with the driver's cab (4) and the low voltage zone (6), wherein the traction zone (17) and the technical zone (29) are respectively located next to each other along the longitudinal axis (X1) of the power unit (1 ).

9. Power unit according to any one of the preceding claims, wherein a pantograph (30) is located on the roof of the technical zone (29) and wherein the technical zone (29) comprises, under a cover on the roof, a high voltage block comprising a circuit breaker and/or a disconnector designed to electrically isolate the pantograph of a traction chain included in the power unit.

10. Power unit according to any one of the preceding claims, comprising three removable covers installed on the roof to protect the equipment mounted on the roof, i.e. the low voltage (6), traction (17) and technical (29) zones respectively.
